Europäisches Patentamt

**European Patent Office**

Office européen des brevets

(11) Numéro de publication: **0 153 218**
**B1**

(12) **FASCICULE DE BREVET EUROPÉEN**

(45) Date de publication du fascicule du brevet:
21.03.90

(51) Int. Cl. 5 : **G 01 N 21/89, G 06 F 15/70**

(21) Numéro de dépôt: 85400178.1

(22) Date de dépôt: 04.02.85

(54) Procédé et installation de détection de défauts de surface sur une bande en cours de défilement.

(30) Priorité: 10.02.84 FR 8402078

(43) Date de publication de la demande:
28.08.85 Bulletin 85/35

(45) Mention de la délivrance du brevet:
21.03.90 Bulletin 90/12

(84) Etats contractants désignés:
AT BE DE GB IT LU NL SE

(56) Documents cité:
EP-A-0 058 028
DE-A-3 145 832
US-A-4 149 089
US-A-4 253 113

Texte d'une conférence présentée au Congrès de Florence, 15-18 Octobre 1984 "3rd European Conference on Nondestructive Testing", Intitulé : "Contrôle optique automatisé des bandes d'acier décapées", Auteurs du texte : D.FERRIEREet al.

IEEE TRANSACTIONS ON PATTERN ANALYSIS AND MACHINE INTELLIGENCE, vol. PAMI-5, no. 6, novembre 1983, pages 563-572, IEEE, New York, US; BINDINGANAVLE R. SURESH et al.: "A real-time automated visual inspection system for hot steel slabs"

(73) Titulaire: **INSTITUT DE RECHERCHES DE LA SIDERURGIE FRANCAISE (IRSID)**
185, rue du Président Roosevelt
F-78105 Saint Germain-en-Laye Cédex (FR)
Titulaire: USINOR S.A.
Immeuble "Ile de France"
F-92070 Paris la Defence (FR)

(72) Inventeur: **Ferriere, Dominique**
6, rue Molière
F-78100 Saint-Germain-en-Laye (FR)
Inventeur: Giraudy, Gabriel
35, rue Gabriel Péri
F-95150 Taverny (FR)

(74) Mandataire: **Ventavoli, Roger**
INSTITUT DE RECHERCHES DE LA SIDERURGIE FRANCAISE (IRSID) Station d'Essais Botte Postale 13
F-57210 Maizieres-lès-Metz (FR)

(56) Documents cité (suite):
IBM TECHNICAL DISCLOSURE BULLETIN, vol. 25, no. 4, septembre 1982, page 2047, New York, US; N.A. FELISS et al.: "Surface analyzer"

PATENTS ABSTRACTS OF JAPAN, vol. 6, no. 166 (P-138) 1044 , 31 aot 1982; & JP - A - 57 82 713 (TOKYO SHIBAURA DENKI K.K.) 24.05.1982

## Description

La présente invention se rapporte à la détection de défauts de surface sur une bande en cours de défilement, et notamment à un procédé du type selon lequel on forme des signaux analogiques représentant les images de parties successives de la surface de la bande et on traite ces signaux pour détecter des variations de niveau anormales.

Le domaine d'application de l'invention est plus particulièrement celui de la détection de défauts de surface sur une tôle laminée défilant à grande vitesse.

Dans le cadre de cette application, un procédé du type défini ci-dessus est décrit dans le brevet français No 7 727 501. La surface de la tôle est éclairée et l'on forme, au moyen d'une caméra de télévision, des images réfléchies de parties successives de la surface de la tôle qui constituent une représentation continue de la surface examinée. Chaque image est analysée par comparaison avec un niveau de luminance maximal et un niveau de luminance minimal. Un enregistrement est effectué du nombre de défauts détectés sur chaque image et du pourcentage de la surface totale des défauts par rapport à la surface de la partie de bande correspondant à une image.

On sait que l'examen des tôles laminées, et notamment de tôles laminées à chaud en sortie d'une ligne de décapage est difficile. En effet, d'une part, il existe un grand nombre de défauts possibles, plus ou moins étendus, visibles ou graves et, d'autre part, la surface d'une tôle est rugueuse et présente des tâches résultant d'un décapage non régulier. C'est pourquoi, avec le procédé connu décrit ci-avant, il est pratiquement impossible de réaliser une détection efficace de tous les défauts réels sans introduire une proportion importante de détections intempestives.

Ainsi, dans la pratique, on a recours à un examen visuel des tôles. Pour que l'opérateur ait une image nette de la tôle en mouvement, il est nécessaire que la vitesse de celle-ci soit limitée. Or, il est souhaitable, de pouvoir effectuer un examen à vitesse élevée et des deux côtés de la tôle pour détecter les défauts en temps réel. Cette possibilité s'avérerait particulièrement avantageuse pour permettre un examen d'une tôle après laminage à chaud et décapage et avant laminage à froid lorsque le train de laminage à froid est relié directement à la ligne de décapage. En effet, dans un tel cas, la combinaison d'une détection sûre des défauts dangereux pour le laminage à froid et d'une vitesse de défilement élevée (par exemple jusqu'à 6 m/s) au poste de contrôle est hautement désirable.

Un autre procédé de détection automatique de défauts permettant de plus la classification automatique par type de défauts selon leurs formes est décrit dans le document: "IEEE Transaction on Pattern Analysis and Machine Intelligence, vol. PAMI–5, n° 6, novembre 1983, p. 563 - 572, BINDINGANAVLE R. SURESH et al.: "A real time automated visual inspection system for hot steel slabs". Toutefois dans ce procédé la surface est analysée ligne par ligne par une caméra linéaire et une deuxième caméra est nécessaire pour déterminer la position de chaque ligne par rapport au produit examiné. De plus les signaux issus de la première caméra sont immédiatement numérisés, et il n'est donc pas possible d'obtenir l'image réelle des défauts de surface, ce qui exclut l'examen visuel de ceux-ci par un opérateur.

On connaît aussi par ailleurs d'autres procédés de reconnaissance automatique de formes d'objet ou de défauts par traitement numérique d'images digitalisées de ceux-ci (DE-A-3 145 832, US-A-4 149 089, et "IBM Technical Disclosure Bulletin, vol. 25, N° 4, sept. 82, P. 2047, N.A. FELLISS et al.: "Surface analyser"). Ces procédés sont limités à la détection de défauts par traitement de signaux issus de caméra et directement digitalisés, ce qui exclut le contrôle visuel complémentaire souhaité.

Aussi, la présente invention a pour but de fournir un procédé permettant une détection efficace de défauts de surface sur une bande en cours de défilement, alliant la fiabilité de la détection automatique d'irrégularités de surface à la fiabilité de la qualification de ces irrégularités par un contrôle visuel, même lorsque la bande est déplacée à une vitesse élevée.

Ce but est atteint grâce à un procédé du type défini en tête de la description et selon lequel on forme périodiquement des images de parties successives de surface de la bande, on convertit ces images sous forme de signaux analogiques et on traite ces signaux pour détecter des variations de niveau de ces signaux anormales, le traitement comprenant les opérations de: conversion des signaux analogiques sous forme numérique en divisant l'image en éléments d'image à chacun desquels est associé une valeur numérique, filtrage des signaux numériques représentatifs de l'image pour détecter des variations relatives des valeurs numériques des éléments d'image, et analyse du signal filtré pour fournir ou non un signal de détection de défaut en fonction des variations détectée.

Conformément à l'invention ce procédé est caractérisé en ce que on forme chaque image au moyen d'un seul dispositif photosensible et en ce que lors de la formation desdites images,

- les signaux analogiques représentatifs de chaque image sont enregistrés dans une mémoire analogique d'images,
- le traitement des signaux analogiques relatifs à chaque image est effectué avant présentation des signaux représentatifs de l'image suivante, le filtrage des signaux numériques représentatifs d'une image étant effectué au moins en partie au moyen d'un filtre bidirectionnel de détection de contour qui permet de détecter des contours orientés dans n'importe quelle direction en détectant, entre plusieurs éléments d'image situés à proximité les uns des autres dans des directions différentes, des variations des valeurs numériques desdits éléments d'image d'amplitude supérieure à un premier seuil prédéterminé,
- l'enregistrement représentatif de l'image est conservé ou non en réponse à l'émission ou à l'absence d'émission du signal de détection de défaut, et
- chaque enregistrement conservé est lu pour visualisation à un poste de contrôle pendant une durée suffisante pour effectuer un contrôle visuel de l'image qu'il représente.

Ainsi, le procédé conforme à l'invention allie la fiabilité de la détection automatique d'irrégularités de surface sur une bande en mouvement à la fiabilité de la qualification des irrégularités détectées par un contrôle visuel des images fixes de ces irrégularités.

L'analyse du signal filtré peut consister alors, pour chaque image, à élaborer, à partir des variations détectées d'amplitude supérieure au premier seuil une information quantitative (par exemple aire ou périmètre) des irrégularités de surface de l'image considérée et à fournir ou non le signal de détection de défaut selon que cette information quantitative est supérieure ou non à un second seuil prédéterminé.

Selon une particularité du procédé conforme à l'invention, le filtrage des signaux numériques est effectué de deux façons différentes selon que ces signaux sont associés à des éléments d'image situés au voisinage des bords de la bande ou à des éléments d'image situés en pleine face de la bande. A cet effet, on sépare les signaux numériques en premiers signaux numériques représentatifs de parties de l'image situées le long des bords de la bande et seconds signaux numériques représentatifs des autres parties de l'image, on traite les premiers signaux numériques pour détecter les variations d'amplitude correspondant au passage d'un côté à l'autre des bords de la bande et pour fournir une information représentant l'écart entre la position détectée du bord de la bande et une position de référence, et on traite les seconds signaux numériques pour associer à chaque élément d'image une information représentant les variations d'amplitude des signaux numériques associés aux éléments d'image voisins. Ainsi, les défauts de bord peuvent être détectés en examinant l'écart entre les positions mesurées et de référence des bords, tandis que les défauts de pleine face peuvent être détectés en recherchant les éléments d'image situés sur le contour d'une "tâche" de l'image.

De préférence, on enregistre les signaux représentatifs de chaque image dans une mémoire de masse adressable image par image, et on commande le passage d'une adresse à une autre en mode écriture en réponse à un signal de détection de défaut.

Les enregistrements conservés sont de préférence lus séquentiellement pour permettre une visualisation de chacune des images qu'ils représentent pendant une durée prédéterminée au terme de laquelle l'adresse à laquelle figure l'enregistrement de l'image qui vient d'être visualisée est à nouveau disponible en mode écriture. Ainsi, l'opérateur dispose d'une période de temps prédéterminée pour qualifier l'irrégularité de surface détectée, période au terme de laquelle l'enregistrement de cette image peut être effacé par un nouvel enregistrement. L'absence de qualification pendant cette période peut être assimilée à un défaut grave.

Avantageusement, on effectue un examen simultané des deux faces opposées de la bande en alternant le traitement de signaux d'images de parties successives d'une face avec le traitement de signaux d'images de parties successives de l'autre face. Il est alors possible de visualiser les enregistrements conservés d'images de parties d'une des faces sur un dispositif de visualisation différent de celui utilisé pour visualiser les enregistrements conservés d'images de parties de l'autre face.

L'invention a aussi pour but de fournir une installation permettant la mise en oeuvre du procédé défini plus haut.

Ce but est atteint par une installation du type comprenant au moins un dispositif photosensible qui engendre périodiquement des signaux analogiques représentant les images de parties successives de surface de la bande et un dispositif de traitement des signaux analogiques pour détecter des variations de niveau anormales, le dispositif de traitement comprenant:

- un convertisseur analogique-numérique pour convertir les signaux analogiques représentant chaque image sous forme numérique en divisant l'image en éléments d'image à chacun desquels est associée une valeur numérique;
- un filtre numérique recevant les signaux numériques représentant chaque image et détectant des variations relatives des valeurs numériques des éléments d'image et
- un circuit d'analyse branché en sortie du filtre numérique pour engendrer ou non, pour chaque image, un signal de détection de défaut en fonction des variations de valeurs numériques détectées.

Conformément à l'invention, l'installation est caractérisée en ce que chaque image est engendrée par un seul dispositif photosensible, en ce que le filtre numérique comporte un filtre bidirectionnel de détection de contour comprenant des moyens pour associer à chaque élément d'image une information numérique calculée en fonction des valeurs numériques associées à des éléments d'image voisins dans des directions différentes, en détectant des variations desdites valeurs numériques, et en ce qu'elle comporte en outre une mémoire analogique de masse adressable image par image destinée à enregistrer des signaux analogiques représentant chaque image convertie par le dispositif photosensible et en ce que:
- des moyens sont prévus pour commander la conservation ou la non conservation de l'enregistrement d'une image, à la fin de la période au cours de laquelle cette image a été convertie par le dispositif photosensible, en réponse à la présence ou à l'absence d'un signal de détection de défaut correspondant à cette image, et

— un dispositif de visualisation est relié à la mémoire analogique de masse pour visualiser successivement sous forme d'image fixe chaque enregistrement conservé afin de permettre un contrôle visuel de l'image que représente cet enregistrement.

Le circuit d'analyse comporte préférentiellement des moyens pour élaborer une information quantitative à partir des détections d'éléments d'image pour lequel l'information numérique associée dépasse un premier seuil prédéterminé, et des moyens de comparaison pour produire un signal de détection de défaut lorsque ladite information quantitative dépasse un second seuil prédéterminé.

Le filtre numérique peut comporter en outre un filtre de détection de bords pour détecter les positions des bords de la bande et fournir des informations représentant les écart entre les positions détectées des bords et des positions de référence. Ces informations sont prises en compte par le circuit d'analyse lorsque les écarts détectés dépassent un seuil prédéterminé.

De préférence, la mémoire de masse est une mémoire analogique destinée à enregistrer les signaux analogiques représentant chaque image et adressable image par image. Comme mémoire analogique, on utilise avantageusement au moins un vidéodisque magnétique.

L'écriture et la lecture dans la mémoire sont commandées en réponse à la réception de signaux de détection de défaut. Avantageusement, la mémoire de masse comprend deux unités de mémoire dont l'une fonctionne en mode écriture tandis que l'autre fonctionne en mode lecture, ou inversement ainsi, une image enregistrée dans une unité est visualisée tandis que chaque nouvelle image formée est enregistrée dans l'autre unité.

De préférence encore, afin de réaliser une inspection simultanée des deux faces de la bande, l'installation comprend un premier et un second dispositifs photosensibles disposes de chaque côté de la bande pour engendrer chacun des signaux analogiques représentant les images de parties successives d'une face respective de la bande, un circuit de commutation branché entre, d'une part, les dispositifs photosensibles et, d'autre part, la mémoire de masse et le dispositif de traitement, et des moyens de commande du circuit de commutation pour transmettre à la mémoire de masse et au dispositif de traitement alternativement un signal analogique d'image d'une face et un signal analogique d'image de l'autre face. Deux appareils distincts de visualisation peuvent alors être utilisés pour visualiser les enregistrements conserves relatifs respectivement à l'une des races de la bande et à l'autre face.

Pour des raisons d'encombrement, les dispositifs photosensibles peuvent devoir être décalés le long de la ligne d'inspection. Dans ce cas, les signaux d'image produits par le dispositif amont sont retardés pour compenser le décalage afin de disposer à chaque instant de signaux d'image se rapportant aux faces opposés d'un même tronçon de bande.

D'autres particularités et avantages du procédé et de l'installation conformes à l'invention ressortiront à la lecture de la description faite ci-après, à titre indicatif mais non limitatif, en référence aux dessins annexés sur lesquels:

— la figure 1 est un schéma général d'un mode de réalisation d'une installation conforme à l'invention,
— la figure 2 illustre le fonctionnement du filtre numérique de l'installation montrée sur la figure 1,
— la figure 3 est un schéma plus détaillé de ce filtre numérique, et
— la figure 4 est un organigramme fonctionnel des tâches effectuées par le microprocesseur de l'installation illustrée par la figure 1.

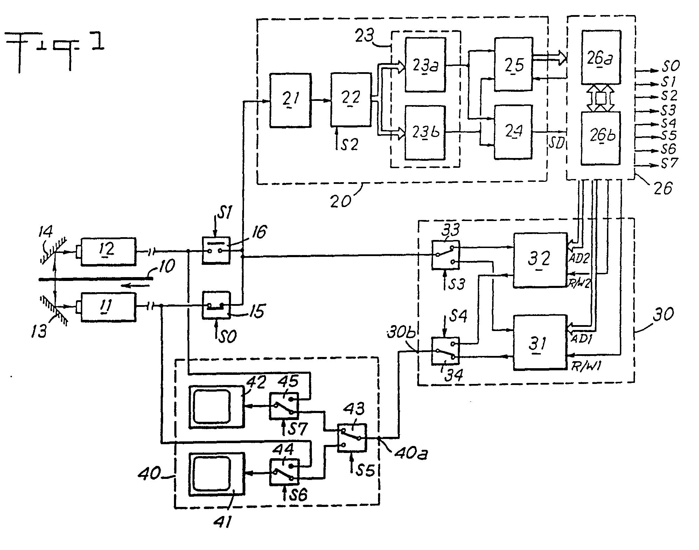

L'installation représentée sur la figure 1 est destinée à la détection de défauts de surface sur une tôle 10 en cours de défilement, par exemple une tôle sortant d'une ligne de décapage après laminage à chaud.

Chaque face de la tôle 10 est inspectée au moyen d'une caméra de télévision respective 11, 12. Les caméras sont situées de part et d'autre du plan de transport de la tôle 10 et sont disposées, dans l'exemple illustré, parallèlement à la tôle. Les images des faces de la tôle 10 sont renvoyées vers les caméras par des miroirs 13, 14 inclinés à 45° par rapport à la tôle. L'ensemble formé par une caméra et le miroir associé est logé dans un boîtier étanche aux poussières et muni d'une fenêtre d'observation du côté de la tôle. Ce boîtier est lui-même logé dans une enceinte munie de moyens, tels que tubes néon et diffuseur, pour éclairer la tôle de façon aussi homogène que possible.

Chaque caméra 11, 12 est équipée d'un tube de très grande sensibilité avec possibilité d'obturation, par exemple le tube connu sous la dénomination ISOCON et produit par la société britannique dénommée English Electric Valves. Ce tube est obturable électroniquement, ce qui évite d'avoir recours à des dispositifs électromécaniques moins fiables et diminuant la sensibilité. Avec un tel tube, la durée de lecture est de 20 ms et le temps de pose est réglable. Pour l'application envisagée, ce temps de pose est préréglé pour permettre un éclairement suffisant sans perturber de façon trop sensible la perception d'irrégularités de surface. A titre indicatif, pour une tôle défilant à 6 m/s, un temps de pose de 300 µs peut convenir, la tôle ne parcourant qu'environ 2 mm pendant la pose. Chaque caméra est équipée d'un objectif télécommandé pour permettre le réglage de la mise au point, du diaphragme et du grossissement. La fréquence de prises de vue est déterminée, en fonction du champ des caméras, de manière à former des images successives qui représentent des parties adjacentes de chaque face de la tôle, sans espace entre deux parties consécutives un léger recouvrement entre parties adjacentes est préférable pour être sûr d'éviter qu'une zone échappe à l'inspection.

Si l'on suppose que le champ de chaque caméra couvre une longueur de tôle de 1 m, et que la vitesse de défilement est de 6 m/s, la fréquence de prise de vue pour chaque caméra est donc au moins égale à 6 prises de vue par seconde. Comme indiqué ci-après, les signaux représentant les images des parties successives des deux faces de la tôle sont intercalés afin d'être traités séquentiellement. Aussi, les caméras 11 et 12 fonctionnent en alternance et la durée totale de la pose et de la lecture pour chaque image reçue par une caméra doit être inférieure à la demi-période des prises de vue cette condition est largement satisfaite si l'on considère les chiffres cités ci-avant à titre d'exemple.

Les caméras 11 et 12 fonctionnent en permanence, mais les signaux produits par ces caméras sont prélevés en alternance afin d'appliquer à l'entrée d'un dispositif de traitement 20 alternativement une trame provenant de la caméra 11 et une trame provenant de la caméra 12. A cet effet, les signaux de sortie des caméras sont transmis à l'entrée du dispositif 20 par l'intermédiaire d'interrupteurs respectifs 15, 16 dont la la fermeture est commandée en alternance, et à chaque fois pendant la durée juste nécessaire à la transmission des signaux à traiter, par des signaux de commande respectifs S0, S1. Avec les chiffres indiqués ci-dessus, chacun des signaux S0, S1 est sous forme de créneaux rectangulaires de durée égale à 20 ms et de période égale à 1/6 s.

Le dispositif de traitement 20 comporte un circuit 21 de réglage de gain et filtrage analogique recevant les signaux d'image sérialisés, un circuit 22 formant échantillonneur-bloqueur et convertisseur analogique-numérique connecté à la sortie du circuit 21, un circuit de filtrage numérique 23 connecté à la sortie du circuit 22, un circuit d'analyse 24 recevant les signaux numériques produits à la sortie du circuit de filtrage 23, un circuit de mémoire 25, et un circuit à microprocesseur 26.

Le circuit 21 comporte un amplificateur à gain asservi afin de compenser les variations de niveau de gris du fond de la tôle et un filtre passebande pour ne retenir que les signaux de la bande de fréquences utiles.

Le circuit 22 a pour fonction de convertir sous forme numérique les signaux d'image analogiques, il reçoit un signal de commande S2 qui détermine la fréquence d'échantillonnage, par exemple 5 MHz.

Les mots numériques produits par le circuit 22 sont reçus par le circuit de filtrage 23 dont la fonction est de détecter des variations relatives des valeurs des mots numériques.

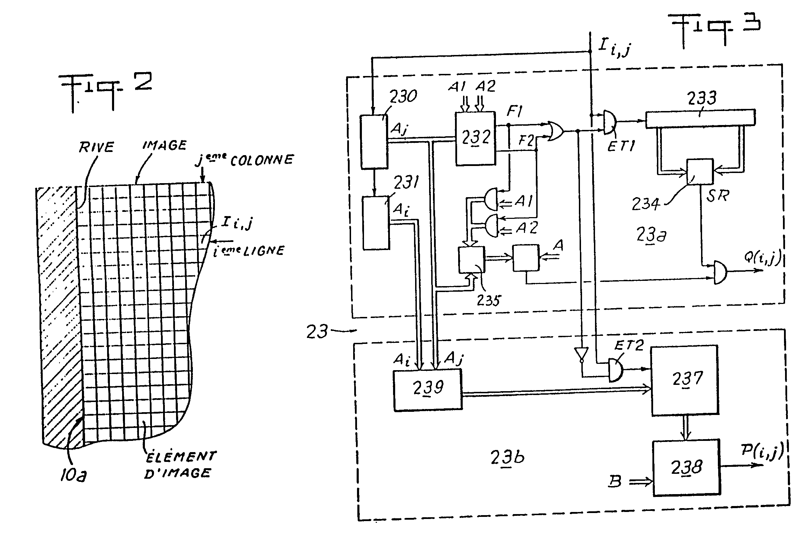

Le circuit de filtrage comprend un filtre 23a de détection de rives et un filtre 23b de détection de contour. Si l'on se reporte à la figure 2, l'on voit une partie de surface de la tôle 10 telle que vue depuis une des caméras. La lumière réfléchie par la surface de la tôle crée un contraste très net entre les deux parties de l'image séparées par la rive 10a de la tôle.

Le filtre 23a de détection de rives a pour objet de réaliser un traitement particulier des signaux représentatifs des parties d'image situées le long des rives.

Au cours d'une phase d'initialisation du procédé portant par exemple sur les 16 premières lignes de la première image, l'on détermine les adresses des rives de la tôle, adresses exprimées en numéros de points d'une ligne de la trame correspondant à la rive. Si l'on désigne par $I_{i,j}$ le mot numérique représentant l'élément d'image situé à l'intersection de la ligne i et de la colonne j, la détection d'une rive est effectuée en réalisant la différence $I_{i,j+3} - I_{i,j}$, c'est-à-dire que l'on compare deux éléments d'image d'une même ligne non pas successifs, mais séparés par deux éléments d'image. En variante, l'on pourrait effectuer les différences $I_{i,j+2} - I_{i,j}$ ou $I_{i,j+4} - I_{i,j}$. Le fond de chaque côté de la tôle étant uniformément noir, la première transition détectée correspond à la rive gauche 10a de la tôle. L'adresse j + 3 est enregistrée, ainsi que l'amplitude de cette transition. La détection de l'autre rive de la tôle est réalisée lorsqu'une transition de même amplitude est mesurée; l'adresse de cette seconde transition est enregistrée. L'on procède ainsi de façon similaire pour les 16 premières lignes et l'on effectue les moyennes des adresses de transition enregistrées pour chaque rive. Ces valeurs moyennes constituent les adresses de références des rives A1 et A2 exprimées en numéros de points sur une ligne.

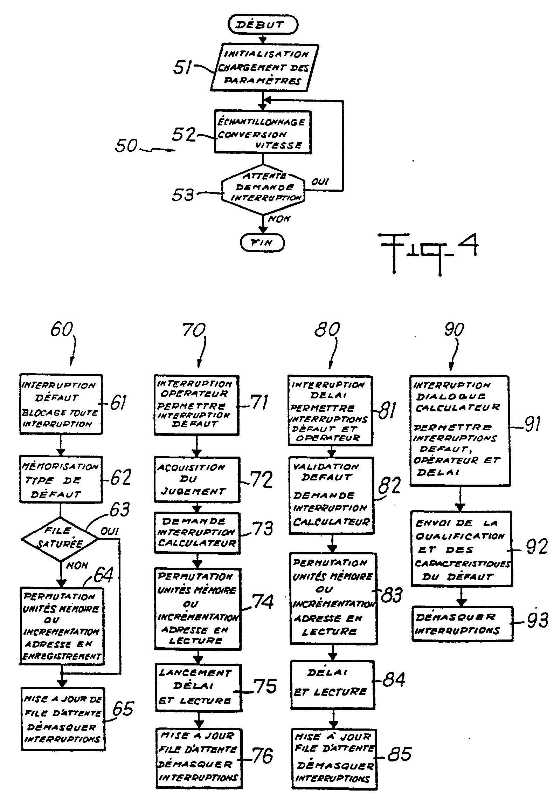

Comme le montre la figure 3, les mots numériques successifs reçus par le circuit 23 sont comptés au moyen d'un compteur 230 qui fournit l'adresse j de l'élément d'image correspondant au mot numérique reçu. A la fin de chaque ligne d'image (c'est-à-dire ici lorsque 256 mots numériques ont été comptés), le compteur 230 revient à l'état initial et un second compteur 231 analogue est incrémenté, ce second compteur 231 fournissant l'adresse i de l'élément d'image correspondant au mot numérique reçu. Le filtre 23a n'opère que pour les zones de l'image situées le long des rives de la tôle, c'est-à-dire sur des bandes d'image s'étendant de A1 - N à A1 + N et A2 - N à A2 + N. On pourra par exemple choisir N = 16. Les fenêtres de fonctionnement du filtre 23a sont définies au moyen d'un circuit logique 232 recevant les valeurs A1, A2 et le contenu $A_j$ du compteur 230 et fournissant un signal F1 lorsque $A1 - N \le A_j \le A1 + N$ et un signal F2 lorsque $A2 - N \le A_j \le A2 + N$. Les signaux F1 et F2 sont réunis par une porte OU pour commander l'ouverture d'une porte ET1 à travers laquelle les mots numériques reçus sont transmis à un registre 233 à entrée série et sorties parallèles pour mémoriser en permanence les mots représentant quatre éléments d'image successifs d'une même ligne. Un soustracteur 234 est relié à des sorties du registre 233 pour effectuer la différence $I_{i,j+z} - I_{i,j}$ et fournir un signal SR en réponse à la détection d'une transition correspondant à une rive. Un soustracteur 235 effectue la différence entre $A_j$ et, soit la valeur A1, soit la valeur A2, l'une ou l'autre de ces valeurs étant transmise au soustracteur 235 sous la commande des signaux F1 et F2. Cette différence $A_j$ - A1 ou $A_j$ - A2 est comparée en valeur absolue à un seuil prédéterminé A au moyen d'un comparateur qui associe à chaque mot numérique $I_{i,j}$ une valeur binaire $Q(i,j)$ égale à 1 ou 0 selon que $Q(i,j) > A$ ou $Q(i,j) \leq A$. A chaque détection de rive (signal SR), la valeur $Q(i, j)$ est transmise au circuit d'analyse 24. Cette valeur ne sera égale à 1 que si l'écart entre l'adresse de rive détectée et celle de référence est supérieur à A, signifiant l'existence d'un défaut de rive. L'on pourra choisir pour A une valeur correspondant par exemple à quatre éléments d'image.

A l'extérieur des fenêtres de fonctionnement du filtre 23a, les mots numériques $I_{i,j}$ sont traités au moyen du filtre de détection de contour 23b qui a pour fonction de détecter des variations traduisant l'existence d'une irrégularité de surface dont le contour (ou périmètre) est ainsi déterminé. Différents types de filtres de détection de contour sont connus; on pourra par exemple utiliser un filtre bidirectionnel de Prewitt. A chaque élément d'image converti sous forme d'un mot numérique est associée une quantité numérique calculée en fonction des mots numériques représentant les éléments d'image voisins. Pour chaque élément d'image, la quantité associée conformément à la formule de Prewitt est: $P(i, j) = |Pz|+|Py|$ avec

$$Px = I_{i-1,j+1} + I_{i,j+1} + I_{i+1,j+1} - I_{i-1,j-1} - I_{i,j-1} - I_{i+1,j-1}$$
$$Py = I_{i+1,j-1} + I_{i+1,j} + I_{i+1,j+1} - I_{i-1,j-1} - I_{i-1,j} - I_{i-1,j+1}$$

Cela revient, pour chaque élément d'image, à calculer, d'une part, la différence entre les mots numériques cumulés des trois éléments d'image adjacents de la ligne suivante et les mots numériques cumulés des trois éléments d'image adjacents de la ligne précédente et, d'autre part, la différence entre les mots numériques cumulés des trois éléments d'image adjacents de la colonne suivante et les mots numériques cumulés des trois éléments d'image adjacents de la colonne précédente, puis à sommer ces différences. Lorsque la quantité $P(i, j)$ dépasse un seuil prédéterminé B cela signifie que l'élément d'image considéré se trouve à la limite de deux zones de niveau de gris relativement différents, donc sur le contour d'une tache ou irrégularité de surface. On notera que le caractère bidirectionnel du filtre permet de détecter des contours orientés dans n'importe quelle direction. On donne à $P(i, j)$ une valeur binaire, par exemple 1 ou 0 selon que $P(i, j) > B$ ou $P(i, j) \leq B$.

Comme le montre la figure 3, les mots numériques $I_{i,j}$ à traiter par le circuit 23b sont transmis à un registre adressable 237 à travers une porte ET2 qui est ouverte sous la commande de l'inverse du signal de commande de la porte ET1. Un circuit de calcul 238 est connecté au registre 237 pour recevoir de celui-ci les informations nécessaires au calcul de $P(i, j)$. Ces informations sont lues dans le registre 237 sous la commande de signaux d'adresse fournis par un circuit logique d'adressage 239 qui reçoit les contenus $A_j$ et $A_i$ des compteurs 230 et 231, c'est-à-dire l'adresse $(i, j)$ de l'élément d'image correspondant au mot reçu. Les quantités px et Py et $P(i, j)$ sont élaborées pendant le temps de présentation du mot numérique $I_{i,j}$. Un comparateur est prévu dans le circuit de calcul 238 pour comparer $|Px| + |Py|$ au seuil B afin de fournir la quantité $P(i, j)$ sous forme binaire.

Le circuit d'analyse 24 reçoit les signaux binaires $Q(i, j)$ et $P(i, j)$ produits par les filtres 23a et 23b, et en effectue la somme S pour l'image complète. Cette somme est comparée à un seuil C et le circuit d'analyse produit un signal SD de détection de défaut lorsque $S > C$, et ne produit pas de signal lorsque $S \leq C$. Parallèlement, la somme S est enregistrée dans la mémoire 25.

La détection de contour peut être affinée en éliminant les points isolés, c'est-à-dire en ne prenant pas en compte les quantités $P(i, j)$ qui dépassent le seuil B lorsque les quantités associées aux éléments d'image voisins ne dépassent pas ce seuil. Il peut en être de même pour la détection des rives.

Le traitement complet des signaux d'image au moyen des circuits 21 à 25 est effectué en temps réel, pour chaque image, c'est-à-dire avant présentation des signaux représentatifs de l'image suivante. Le débit de données est très élevé; il peut atteindre 1,5 million de mots numériques par seconde en sortie du convertisseur. Aussi, le traitement numérique est-il effectué en logique câblée, afin de disposer d'une vitesse de traitement très rapide, et le circuit à microprocesseur 26 effectue des tâches de commande et de liaison avec l'extérieur, comme cela sera décrit plus loin de façon plus détaillée. On notera déjà que le circuit 26 fournit les signaux S0 et A1 de commande de position des interrupteurs 15 et 16.

En ce qui concerne la détection de contour, l'on a simplement envisagé ci-avant de déterminer la somme des quantités $P(i, j)$, ce qui donne une indication sur l'aire totale des défauts. On notera que des algorithmes connus en eux-mêmes pourraient être mis en oeuvre pour calculer également le périmètre des défauts ainsi que le nombre d'Euler (contours inscrits dans un autre contour). Si les quantités $P(i, j)$ sont utilisées pour calculer le périmètre total des défauts, c'est ce périmètre (et non pas l'aire comme précédemment) qui est comparé à un seuil prédéterminé pour commander ou non l'émission d'un signal de défaut.

En parallèle avec le traitement des signaux analogiques représentatifs de chaque image est effectué un enregistrement de ces signaux. On utilise à cet effet un dispositif d'enregistrement 30 qui reçoit sur son entrée 30a les signaux analogiques en sortie des interrupteurs 15 et 16 et qui comprend deux unités de mémoire 31, 32 à vidéo-disques magnétiques adressables image par image. Les signaux reçus sont enregistrés dans l'une ou l'autre des unités 31, 32 selon la position d'un commutateur 33 ayant un contact mobile relié à l'entrée 30a et deux contacts fixes reliés respectivement aux entrées d'enregistrement des unités 31, 32. Les signaux enregistrés peuvent être lus dans l'une ou l'autre des unités 31, 32 selon la position d'un commutateur 34 ayant deux contacts fixes reliés respectivement aux sorties de lecture des unités 31, 32 et un contact mobile relié à la sortie 30b du dispositif d'enregistrement.

Les unités de mémoire 31, 32 fonctionnent sous la commande de signaux produits par le circuit 26 à microprocesseur. Le fonctionnement en mode enregistrement ou lecture est commandé par des signaux complémentaires L/E1 et L/E2, de sorte que, dans tous les cas, l'une des unités fonctionne en mode enregistrement lorsque l'autre fonctionne en mode lecture. En outre, le circuit 26 transmet aux unités 31, 32 des signaux d'adresse AD1, AD2 qui définissent les adresses d'enregistrement ou de lecture des signaux d'image, une adresse correspondant à une image. Enfin, le circuit 26 fournit aussi les signaux S3, S4 qui commandent la position des commutateurs 33 et 34.

L'installation représentée sur la figure 1 comporte enfin un dispositif de visualisation 40 dont une entrée 40a est connectée à la sortie 30b du dispositif d'enregistrement. Le dispositif 40 est destiné à permettre la visualisation d'images fixes enregistrées dans les unités 31, 32. Dans l'exemple illustré, il comporte deux moniteurs de télévision 41, 42 associés respectivement aux deux faces de la tôle 10. Selon que des signaux d'image lus dans le dispositif d'enregistrement 30 représentent l'image d'une partie de la surface inférieure ou l'image d'une partie de la surface supérieure de la tôle, ces signaux sont aiguillés vers le moniteur 41 ou le moniteur 42 au moyen d'un commutateur 43. Ces moniteurs permettent aussi, éventuellement, de visualiser directement les deux faces de la tôle 10 en défilement. A cet effet, les signaux de sortie des caméras 11, 12 sont appliqués à des contacts fixes de commutateurs 44, 45 dont les autres contacts fixes sont reliés respectivement aux contacts fixes du commutateur 43 et dont les contacts mobiles sont reliés aux entrées vidéo des moniteurs 41, 42. Ainsi, selon la position des commutateurs 44, 45, sont visualisées soit les images fixes lues dans le dispositif d'enregistrement 30, soit directement les images des faces de la tôle en défilement. Les positions des commutateurs 43, 44, 45 sont commandées par des signaux S5, S6, S7 produits par le circuit à microprocesseur 26.

L'installation décrite ci-avant fonctionne de la manière suivante.

Les signaux représentatifs de chaque image formée par les caméras 11, 12 sont analysés par le dispositif de traitement 20 tout en étant parallèlement enregistrés dans l'une des unités de mémoire analogique à une adresse spécifiée par le circuit 26.

Si aucun signal de détection de défaut SD n'est produit par le circuit 24, il n'est pas nécessaire de conserver l'enregistrement de l'image et de prendre en compte l'information stockée dans la mémoire 25. Les signaux représentatifs de l'image suivante sont alors enregistrés à la même adresse de la même unité de mémoire analogique et l'information d'irrégularités de surface relative à cette image suivante sont stockées dans la mémoire 25 à la place des précédentes informations.

Si, par contre, un signal de détection de défaut SD est produit, l'information stockée dans la mémoire 25 est transférée dans la mémoire vive 26a du circuit à microprocesseur et les signaux d'image enregistrés dans l'unité de mémoire sont conservés, soit en inversant les fonctionnements des deux unités de mémoire (de sorte que les signaux relatifs à l'image suivante seront enregistrés dans l'autre unité de mémoire), soit en incrémentant l'adresse d'écriture (de sorte que les signaux relatifs à l'image suivante seront enregistrés à une autre adresse de la même unité de mémoire).

La lecture dans les unités de mémoire et le fonctionnement du dispositif de visualisation 40 sont commandés par le dispositif à microprocesseur pour permettre à un opérateur de visualiser sous forme d'images fixes toutes les images dont les enregistrements sont conservés dans les unités de mémoire (c'est-à-dire les images ayant donné lieu à l'émission d'un signal de détection de défaut), et de qualifier les irrégularités de surface visualisées.

La qualification des irrégularités visualisées est envoyée à un calculateur extérieur qui a reçu l'information lue dans la mémoire 25 et enregistrée en mémoire vive 26a. Cette qualification est transmise sous forme d'un code indiquant soit qu'il s'agit d'un défaut sans gravité, soit qu'il s'agit d'un défaut grave et, dans ce dernier cas, la nature de ce défaut (trou, pli, empreinte de cylindre,...).

Le repérage de l'emplacement approximatif du défaut sur la tôle peut être effectué de plusieurs manières. Le signal de défaut peut être envoyé à un calculateur extérieur où il est placé dans une file d'attente jusqu'à réception de la qualification, le calculateur extérieur étant programmé comme cela est connu en soi pour suivre la tôle pendant tout son traitement, et pouvant donc localiser ultérieurement la zone de la tôle qui se trouvait devant les caméras 11, 12 au moment de l'émission du signal de défaut. L'on peut également réaliser un marquage de la tôle par jet de peinture en aval du poste de détection, en réponse au signal de défaut. L'on pourrait encore, connaissant la vitesse de défilement de la tôle, élaborer et associer à l'information de qualification une information de coordonnée calculée en mesurant le temps écoulé depuis le début du processus jusqu'à l'émission du signal de défaut.

Après envoi au calculateur extérieur, les caractéristiques du défaut enregistrées en mémoire vive 26a sont effacées.

La durée de présentation de chaque image fixe à l'opérateur est limitée (par exemple à 10 s). L'absence de qualification à la fin de ce délai peut être assimilée à une qualification de défaut grave.

Après chaque qualification ou chaque fin de délai de présentation, une nouvelle image est automatiquement présentée parmi celles restant conservées dans les unités de mémoire 31, 32. L'ordre de présentation des images est le même que celui dans lequel elles ont été enregistrées. La gestion de la file d'attente est réalisée par le microprocesseur 26b du circuit 26, de même que l'aiguillage des images lues vers l'un ou l'autre des moniteurs 41, 42 selon que ces images concernent la face inférieure ou la face supérieure de la tôle. Lorsqu'il ne subsiste plus d'image en attente dans les unités de mémoire, les commutateurs 44, 45 sont commandés de manière à connecter les moniteurs 41, 42 directement en sortie des caméras 11, 12.

La figure 3 est un organigramme fonctionnel des tâches effectuées par le microprocesseur du circuit 26.

Le programme principal 50 comprend:

- une phase 51 d'initialisation et de chargement des paramètres (notamment vitesse dè bande, file d'attente, ...),
- une phase 52 d'échantillonnage et de conversion de vitesse consistant à' générer les signaux S2 à une fréquence prédéterminée, et à générer les signaux S1 et des signaux de commande de prises de vue pour les caméras 11, 12 à une fréquence fonction de la vitesse de défilement, et
- un test 53 d'attente de demande d'interruption: en cas de réponse positive, on revient au début de la phase 52 et, en cas de réponse négative, on termine le programme.

Chaque interruption déclenche le déroulement d'un sous-programme. Dans l'ordre des priorités, les interruptions prévues ici sont celles produites par: l'émission du signal de détection de défaut (60), l'intervention de l'opérateur pour qualifier un défaut (70), la fin du délai de présentation d'une image fixe (80) et une demande de dialogue avec un calculateur extérieur auquel est relié le circuit à microprocesseur (90).

La réception d'un signal de détection de défaut provoque le blocage de toute autre interruption (phase 61), la mémorisation des caractéristiques de défaut par lecture du contenu de la mémoire 25 et transfert en mémoire vive 26a (phase 62). Si la file d'attente n'est pas saturée (test 63), on effectue soit une permutation des unités de mémoire, soit l'incrémentation de l'adresse en enregistrement (phase 64). La permutation consiste à faire passer en mode lecture l'unité de mémoire qui fonctionnait en mode enregistrement et à faire passer l'autre unité de mémoire en mode enregistrement avec retour rapide à la première adresse de lecture ou d'écriture, la permutation n'est possible que si une image n'est pas en train d'être lue sur l'autre unité de mémoire; sinon, on réalise une incrémentation qui consiste à autoriser l'enregistrement à l'adresse suivante sans permuter les fonctionnements des unités de mémoire (c'est-à-dire, ici, à faire avancer d'une piste le vidéo-disque en enregistrement). L'étape suivante (phase 65) consiste dans la mise à jour de la file d'attente des images enregistrées, le lancement des sousprogrammes de lecture et de délai puis le démasquage des interruptions est autorisé. Le sous-programme lecture déclenche la visualisation de l'image à l'adresse spécifiée dans l'unité de mémoire placée en mode lecture et le sous-programme de délai déclenche le lancement du délai de présentation d'image à l'opérateur. Si le résultat du test 63 est positif (file d'attente saturée), on passe directement à la phase 65.

En réponse à l'interruption provoquée par l'opérateur (phase 71), et tout en permettant l'interruption due à une réception de signal de défaut, le jugement (ou qualification de défaut) est acquis par le microprocesseur (phase 72). Ensuite, une demande d'interruption est adressée au calculateur extérieur (phase 73), puis l'on effectue soit une permutation des unités de mémoire, soit une incrémentation de l'adresse en lecture afin de lire l'image conservée suivante (phase 74). Les sous-programmes de lecture et de délai sont lancés (phase 75) puis la file d'attente est mise à jour et le démasquage des interruptions est autorisé (phase 76).

En réponse à l'interruption provoquée par la fin du délai de présentation d'une image, et tout en permettant les interruptions due à la réception d'un signal de défaut ou due a l'action de l'opérateur (phase 81), le premier défaut de la file d'attente est validé et une interruption de dialogue avec le calculateur extérieur est demandée (phase 82); la non qualification du défaut par l'opérateur dans le délai imparti est assimilée à un défaut grave. Ensuite, l'on effectue soit une permutation des unités de mémoire, soit une incrémentation de l'adresse en lecture (phase 83), les sous-programmes de lecture et de délai sont lancés (phase 84) si la file d'attente n'est pas vide, puis la file d'attente est mise à jour et le démasquage des interruptions est autorisé (phase 85).

Enfin, en réponse à l'interruption provoquée par une demande de dialogue avec le calculateur extérieur, et tout en permettant les autres interruptions indiquées ci-avant, (phase 91), la qualification du défaut et l'information numérique le caractérisant lue dans la mémoire 25, sont envoyées au calculateur extérieur (phase 92) et le démasquage des interruptions est autorisé (phase 93).

On a envisagé ci-avant l'envoi au calculateur extérieur des caractéristiques de toutes les irrégularités de surface détectées avec la qualification donnée à ces irrégularités. En variante, ne pourront être envoyées au calculateur extérieur que les caractéristiques des irrégularités de surface qualifiées de défauts graves.

Le choix entre la permutation des unités de mémoire et l'incrémentation d'adresse en enregistrement ou en lecture est effectué comme suit. Dès qu'un premier défaut est détecté après la phase d'initialisation, les unités de mémoire sont permutées par inversion des commutateurs 33 et 34 (signaux S3 et S4) et inversion de L/E1 et L/E2 de manière à pouvoir afficher tout de suite l'image concernée et à enregistrer pendant ce temps dans l'autre unité de mémoire les images éventuelles à conserver. Après affichage de cette première image, et du fait que la première unité de mémoire est vide, les unités de mémoire sont permutées pour pouvoir afficher la ou les images éventuelles enregistrées dans l'autre unité. Lorsqu'il ne subsistera plus dans cette autre unité d'image à visualiser, une nouvelle permutation sera effectuée, et ainsi de suite. Tant qu'il n'y a pas d'image conservée, ou quand il n'y en a plus à afficher, les commutateurs 44 et 45 sont commandés (signaux S6, S7) pour visualiser directement les faces de la tôle en défilement.

La file d'attente des images à visualiser est gérée par le microprocesseur 26b, avec, pour chacune de ces images, l'enregistrement de son adresse en mémoire et d'une information binaire indiquant que cette image représente une partie de la face inférieure ou de la face supérieure de la tôle. Cette information binaire coïncide par exemple avec l'état d'un des signaux S0 et S1. Au moment de la visualisation, l'information binaire ainsi enregistrée est utilisée pour commander le commutateur 43 (signal S5) afin d'aiguiller les signaux vidéo vers le moniteur approprié.

Bien entendu, diverses modifications ou adjonctions pourront être apportées au mode de réalisation décrit ci-avant du procédé et du dispositif conformes à l'invention.

C'est ainsi, en particulier, que les signaux représentatifs de chaque image pourront être enregistrés dans une mémoire numérique, ces signaux étant soit transmis sous forme numérique par les dispositifs photosensibles, soit transmis sous forme analogique et numérisés. La mémoire numérique peut être constituée par deux disques magnétiques similaires à ceux décrits plus haut.

## Revendication

1. Procédé de détection de défauts de surface sur une bande en cours de défilement, procédé selon lequel on forme périodiquement des images de parties successives de surface de la bande, on convertit ces images sous forme de signaux analogiques et on traite ces signaux pour détecter des variations anormales de niveau de ces signaux, le traitement comprenant les opérations de: conversion des signaux analogiques sous forme numérique en divisant l'image en éléments d'image à chacun desquels est associé une valeur numérique, filtrage des signaux numériques représentatifs de l'image pour détecter des variations relatives des valeurs numériques des éléments d'image, et analyse du signal filtré pour fournir ou non un signal de détection de défaut en fonction des variations détectées, caractérisé en ce que on forme chaque image au moyen d'un seul dispositif photosensible et en ce que lors de la formation desdites images,

- les signaux analogiques représentatifs de chaque image sont enregistrés dans une mémoire analogique d'images,
- le traitement des signaux analogiques relatifs à chaque image est effectué avant présentation des signaux représentatifs de l'image suivante, le filtrage des signaux numériques représentatifs d'une image étant effectué au moins en partie au moyen d'un filtre bidirectionnel de détection de contour qui permet de détecter des contours orientés dans n'importe quelle direction en détectant, entre plusieurs éléments d'image situés à proximité les uns des autres dans des directions différentes, des variations des valeurs numériques desdits éléments d'image d'amplitude supérieure à un premier seuil prédéterminé,
- l'enregistrement représentatif de l'image est conservé ou non en réponse à l'émission ou à l'absence d'émission du signal de détection de défaut, et
- chaque enregistrement conservé est lu pour visualisation à un poste de contrôle pendant une durée suffisante pour effectuer un contrôle visuel de l'image qu'il représente.

2. Procédé selon la revendication 1, caractérisé en ce que l'analyse du signal filtré consiste, pour chaque image, à élaborer à partir des variations détectées d'amplitude supérieure au premier seuil une information quantitative des irrégularités de surface de l'image considérée et à fournir ou non le signal de détection de défaut selon que cette information quantitative est supérieure ou non à un second seuil prédéterminé.

3. Procédé selon l'une quelconque des revendications 1 et 2, caractérisé en ce que l'on sépare les signaux numériques en premiers signaux numériques représentatifs de parties de l'image situées le long des bords de la bande et seconds signaux numériques représentatifs des autres parties de l'image, l'on traite les premiers signaux numériques pour détecter les variations d'amplitude correspondant au passage d'un côté à l'autre des bords de la bande et pour fournir une information représentant l'écart entre la position détectée du bord de bande et une position de référence, et l'on traite les seconds signaux numériques pour associer à chaque éléments d'image une information représentant les variations d'amplitude des signaux numériques associés aux éléments d'image voisins.

4. Procédé selon l'une quelconque des revendications 1 à 3, caractérisé en ce qu'on enregistre les signaux analogiques représentatifs de chaque image dans une mémoire de masse analogique adressable image par image, et on commande le passage d'une adresse à une autre en mode écriture en réponse à un signal de détection de défaut.

5. Procédé selon l'une quelconque des revendications 1 à 4, caractérisé en ce que les enregistrements conservés sont lus séquentiellement pour permettre une visualisation de chacune des images qu'ils représentent pendant une durée prédéterminée au terme de laquelle l'adresse à laquelle figure l'enregistrement de l'image qui vient d'être visualisée est à nouveau disponible en mode écriture.

6. Procédé selon l'une quelconque des revendications 1 à 5, caractérisé en ce qu'on effectue un examen simultané des deux faces opposées de la bande en alternant le traitement de signaux d'images de parties successives d'une face avec le traitement de signaux d'images de parties successives de l'autre face.

7. Procédé selon la revendication 6, caractérisé en ce qu'on visualise les enregistrements conservés d'images de parties d'une des faces sur un dispositif de visualisation différent de celui utilisé pour visualiser les enregistrements conservés d'images de parties de l'autre face.

8. Procédé selon l'une quelconque des revendications 1 à 6, caractérisé en ce que, lorsqu'il n'existe ou ne subsiste aucun enregistrement conservé à visualiser, on transmet au poste de contrôle directement les images successives de la surface de bande examinée.

9. Procédé selon l'une quelconque des revendications 1 à 8, caractérisé en ce que la bande en défilement a une vitesse de défilement de l'ordre de 6 m/s.

10. Installation de détection de défauts de surface sur une bande en cours de défilement, comprenant au moins un dispositif photosensible qui engendre périodiquement des signaux analogiques représentant les images de parties successives de surface de la bande et un dispositif de traitement des signaux analogiques pour détecter des variations de niveau anormales, le dispositif de traitement comprenant:

- un convertisseur analogique-numérique (22) pour convertir les signaux analogiques représentant chaque image sous forme numérique en divisant l'image en éléments d'image à chacun desquels est associée une valeur numérique;
- un filtre numérique (23) recevant les signaux numériques représentant chaque image et détectant des variations relatives des valeurs numériques des éléments d'image; et
- un circuit d'analyse (24) branché en sortie du filtre numérique pour engendrer ou non, pour chaque image, un signal de détection de défaut en fonction des variations de valeurs numériques détectées,

installation caractérisée en ce que chaque image est engendrée par un seul dispositif photosensible, en ce que le filtre numérique comporte un filtre bidirectionnel (23b) de détection de contour comprenant des moyens pour associer à chaque élément d'image une information numérique calculée en fonction des valeurs numériques associées à des éléments d'image voisins dans des directions différentes, en détectant des variations desdites valeurs numériques, et en ce qu'elle comporte en outre:

- une mémoire analogique de masse adressable image par image (31, 32) destinée à enregistrer des signaux analogiques représentant chaque image convertie par le dispositif photosensible (11, 12) et en ce que:
- des moyens (26) sont prévus pour commander la conservation ou la non conservation de l'enregistrement d'une image, à la fin de la période au cours de laquelle cette image a été convertie par le dispositif photosensible, en réponse à la présence ou à l'absence d'un signal de détection de défaut correspondant à cette image, et
- un dispositif de visualisation (41, 42) est relié à la mémoire analogique de masse pour visualiser successivement sous forme d'image fixe chaque enregistrement conservé afin de permettre un contrôle visuel de l'image que représente cet enregistrement.

11. Installation selon revendication 10, caractérisée en ce que le filtre numérique comprend un filtre (23a) de détection de bords pour détecter les positions des bords de la bande et fournir des informations représentant des écarts entre les positions détectées des bords et des positions de référence.

12. Installation selon la revendication 10, caractérisée en ce que le circuit d'analyse (24) comporte des moyens pour élaborer une information quantitative à partir des détections d'éléments d'image pour lesquels l'information numérique associée dépasse un premier seuil prédéterminé, et des moyens de comparaison pour produire un signal de détection de défaut lorsque ladite information quantitative dépasse un second seuil prédéterminé.

13. Installation selon la revendication 10, caractérisé en ce que la mémoire analogique de masse (31, 32) est formée par au moins un vidéo-disque magnétique.

14. Installation selon l'une quelconque des revendications 10 à 13, caractérisé en ce que la mémoire analogique de masse comprend deux unités de mémoire (31, 32) dont l'une fonctionne en mode écriture tandis que l'autre fonctionne en mode lecture, ou inversement.

15 Installation selon l'une quelconque des revendications 10 à 14, caractérisé en ce qu'elle comprend un circuit de commande (26) recevant les signaux de détection de défaut et commandant l'écriture et la lecture dans la mémoire de masse.

16. Installation selon l'une quelconque des revendications 10 à 15, caractérisée en ce qu'elle comprend un premier et un second dispositifs photosensibles (11, 12) disposés de chaque côté de la bande (10) pour engendrer chacun des signaux analogiques représentant les images de parties successives d'une face respective de la bande, un circuit de commutation (15, 16) branché entre, d'une part, les dispositifs photosensibles et, d'autre part, la mémoire analogique de masse (31, 32) et le dispositif de traitement (20), et des moyens (26) de commande du circuit de commutation pour transmettre à la mémoire analogique de masse et au dispositif de traitement alternativement un signal analogique d'image d'une face et un signal analogique d'image de l'autre face.

17. Installation selon la revendication 16, caractérisé en ce que le dispositif de visualisation comprend un premier et un second appareils de visualisation (41, 42) reliés à la mémoire analogique de masse (31, 32) par l'intermédiaire de moyens de commutation (34, 43, 44, 45) commandés pour visualiser des enregistrements conservés relatifs à une face de la bande (10) sur le premier appareil de visualisation (41) et visualiser des enregistrements conservés relatifs à l'autre face de la bande (10) sur le second appareil de visualisation (42).

18. Installation selon la revendication 17, caractérisé en ce que les moyens de commutation sont commandés pour connecter le premier et le second appareil de visualisation (41, 42) directement en sortie respectivement du premier et du second dispositif photosensible (11, 12) en réponse à l'absence d'enregistrement conservé à visualiser.

**Patentansprüche**

1. Verfahren zum Nachweis von Oberflächenfehlern auf einem durchlaufenden Bande, bei dem man periodisch Bilder aufeinanderfolgender Oberflächenabschnitte des Bandes aufnimmt, diese Bilder in Form von Analogsignalen umwandelt und diese Signale zum Nachweis von abnormalen Niveauveränderungen dieser Signale verarbeitet, wobei die Verarbeitung folgende Vorgänge umfasst: Umwandeln der Analogsignale in digitale, indem man das Bild in Bildelemente zerlegt und jedem davon einen Digitalwert zuordnet, Ausfiltern der für das Bild repräsentativen Digitalsignale, um relative Veränderungen der Digitalwerte der Bildelemente festzustellen, und Analyse des gefilterten Signales, um ein Fehlernachweissignal in Funktion der festgestellten Veränderungen abzugeben oder nicht abzugeben;

dadurch gekennzeichnet, dass man jedes Bild mittels einer einzigen lichtempfindlichen Einrichtung aufnimmt, und dass während der Aufnahme dieser Bilder:

– die für jedes Bild repräsentativen Signale in einem Analogbildspeicher aufgezeichnet werden,

– die Verarbeitung der sich auf jedes Bild beziehenden Analogsignale vor dem Vorliegen der für das folgende Bild repräsentativen Signale vorgenommen wird, wobei die Filterung der für ein Bild repräsentativen Digitalsignale wenigstens teilweise mittels eines Zweirichtungsfilters für die Feststellung der Kontur vorgenommen wird, das es gestattet, in beliebige Richtungen ausgerichtete Konturen festzustellen, indem es unter mehreren, einander in unterschiedlichen Richtungen nahe gelegenen Bildelementen Veränderungen des Digitalwertes der Bildelemente einer Amplitude feststellt, die oberhalb eines vorbestimmten ersten Schwellwertes gelegen ist,

– die für ein Bild repräsentative Aufzeichnung in Abhängigkeit von der Aussendung oder dem Fehlen der Aussendung des Fehlernachweissignales aufbewahrt oder nicht aufbewahrt wird, und

– jede aufbewahrte Aufzeichnung zur Sichtbarmachung an einem Leitstand während einer genügend grossen Zeitdauer ausgelesen wird, um eine visuelle Kontrolle des dargestellten Bildes vorzunehmen.

2. Verfahren nach Anspruch 1, dadurch gekennzeichnet, dass die Analyse des gefilterten Signales für jedes Bild darin besteht, eine quantitative Information über die Oberflächenunregelmässigkeiten des in Betracht gezogenen Bildes, ausgehend von den festgestellten Veränderungen der über dem ersten Schwellwert liegenden Amplitude, auszuarbeiten und das Fehlernachweissignal abzugeben oder nicht abzugeben, je nach dem ob diese quantitative Information über einem vorbestimmten zweiten Schwellwert liegt oder nicht.

3. Verfahren nach Anspruch 1 oder 2, dadurch gekennzeichnet, dass man die Digitalsignale in erste Digitalsignale auftrennt, die für entlang der Ränder des Bandes gelegene Bildabschnitte repräsentativ sind, und in zweite, für die anderen Bildteile repräsentative Digitalsignale, dass man die ersten Digitalsignale zum Feststellen der Amplitudenveränderungen verarbeitet, die der Passage von einer Seite der Bandränder zur anderen entsprechen, und um eine Information abzugeben, welche den Abstand zwischen der festgestellten Lage des Bandes und einer Referenzposition darstellt, und dass man die zweiten Digitalsignale zur Zuordnung einer Information zu jedem Bildelement verarbeitet, die die Amplitudenveränderungen der den benachbarten Bildelementen zugeordneten Digitalsignale darstellt.

4. Verfahren nach einem der Ansprüche 1 bis 3, dadurch gekennzeichnet, dass man die für jedes Bild repräsentativen Analogsignale in einen analogen, Bild für Bild adressierbaren Massenspeicher aufzeichnet, und dass man beim Aufzeichnen in Abhängigkeit von einem Fehlernachweissignal die Passage von einer Adresse zur anderen steuert.

5. Verfahren nach einem der Ansprüche 1 bis 4, dadurch gekennzeichnet, dass die aufbewahrten Aufzeichnungen nacheinander ausgelesen werden, um eine Wiedergabe jedes der Bilder, die sie repräsentieren, während einer vorbestimmten Zeitdauer zu gestatten, an deren Ende diejenige Adresse, an der sich die Aufzeichnung des soeben sichtbar gemachten Bildes befindet, für eine neue Aufzeichnung verfügbar ist.

6. Verfahren nach einem der Ansprüche 1 bis 5, dadurch gekennzeichnet, dass man eine gleichzeitige Überprüfung der beiden einander gegenüberliegenden Flächen des Bandes vornimmt, indem man die Verarbeitung von Bildsignalen aufeinanderfolgender Abschnitte einer Fläche mit der Verarbeitung von Bildsignalen aufeinanderfolgender Abschnitte der anderen Fläche abwechselt.

7. Verfahren nach Anspruch 6, dadurch gekennzeichnet, dass man die aufbewahrten Aufzeichnungen von Bildern von Abschnitten einer der Flächen auf einer Wiedergabeeinrichtung sichtbar macht, die von derjenigen verschieden ist, welche zur Sichtbarmachung der aufbewahrten Aufzeichnungen von Bildern von Abschnitten der anderen Fläche verwendet wird.

8. Verfahren nach einem der Ansprüche 1 bis 6, dadurch gekennzeichnet, dass für den Fall, dass keine sichtbar zu machende aufbewahrte Aufzeichnung vorhanden ist, oder weiterbesteht, man an den Leitstand unmittelbar die aufeinanderfolgenden Bilder der geprüften Bandoberfläche überträgt.

9. Verfahren nach einem der Ansprüche 1 bis 8, dadurch gekennzeichnet, dass das durchlaufende Band eine Durchlaufgeschwindigkeit in der Grössenordnung von 6 m/s besitzt.

10. Einrichtung zum Nachweis von Oberflächenfehlern auf einem durchlaufenden Bande, mit wenigstens einer lichtempfindlichen Einrichtung, die periodisch die Bilder von aufeinanderfolgenden Abschnitten der Bandoberfläche darstellende Analogsignale erzeugt, und einer Verarbeitungseinrichtung für die Analogsignale, um abnormale Niveauveränderungen festzustellen, wobei die Verarbeitungseinrichtung folgendes aufweist:

– einen Analog/Digital-Wandler (22) zum Umwandeln der jedes Bild darstellenden Analogsignale in Digitalform, indem das Bild in Bildelemente unterteilt und jedem davon ein Digitalwert zugeordnet wird;
– ein Digitalfilter (23), das die jedes Bild darstellenden Digitalsignale erhält und relative Veränderungen der Digitalwerte der Bildelemente ermittelt; und
– einen Analysenkreis (24), der an den Ausgang des Digitalfilters angeschlossen ist, um in Funktion der ermittelten Digitalwertveränderungen für jedes Bild ein Fehlernachweissignal zu erzeugen oder nicht,

welche Einrichtung dadurch gekennzeichnet ist, dass jedes Bild von einer einzigen lichtempfindlichen Einrichtung erzeugt wird, dass das Digitalfilter ein Zweirichtungsfilter (23b) für den Konturennachweis besitzt, das Einrichtungen aufweist, um jedem Bildelement eine Digitalinformation zuzuordnen, die in Funktion der in unterschiedlichen Richtungen einander benachbarten Bildelementen zugeordneten Digitalwerte errechnet ist, indem Veränderungen dieser Digitalwerte festgestellt werden, und dass sie ferner aufweist:

– einen analogen, Bild für Bild adressierbaren Massenspeicher (31, 32) zum Aufzeichnen der jedes von der lichtempfindlichen Einrichtung (11, 12) umgewandelte Bild darstellenden Analogsignale, und dass:
– Einrichtungen (26) zum Steuern der Aufbewahrung oder Nichtaufbewahrung der Aufzeichnung eines Bildes am Ende jener Zeitdauer vorgesehen sind, in deren Verlauf dieses Bild durch die lichtempfindliche Einrichtung umgewandelt worden ist, und zwar in Abhängigkeit von der Anwesenheit oder dem Fehlen eines diesem Bilde entsprechenden Fehlernachweissignales, und
– eine Wiedergabeeinrichtung (41, 42), die an den analogen Massenspeicher zum aufeinanderfolgenden Sichtbarmachen jeder aufbewahrten Aufzeichnung in Form eines Standbildes angeschlossen ist, um eine visuelle Kontrolle des von der Aufzeichnung dargestellten Bildes zu ermöglichen.

11. Einrichtung nach Anspruch 10, dadurch gekennzeichnet, dass das Digitalfilter ein Randerkennungsfilter (23a) zum Feststellen der Lagen der Ränder des Bandes und zur Abgabe von die Abstände zwischen den festgestellten Lagen der Ränder und Referenzpositionen darstellenden Informationen aufweist.

12. Einrichtung nach Anspruch 10, dadurch gekennzeichnet, dass der Analysenkreis (24) Einrichtungen zum Ausarbeiten einer quantitativen Information, ausgehend von der Ermittlung derjenigen Bildelemente, für die die zugehörige Digitalinformation einen ersten vorbestimmten Schwellwert überschreitet, aufweist, sowie Vergleichseinrichtungen zum Erzeugen eines Fehlernachweissignales, sobald die quantitative Information einen vorbestimmten zweiten Schwellwert überschreitet.

13. Einrichtung nach Anspruch 10, dadurch ge-

**23**

kennzeichnet, dass der analoge Massenspeicher (31, 32) von wenigstens einer magnetischen Videoplatte gebildet ist.

14. Einrichtung nach einem der Ansprüche 10 bis 13, dadurch gekennzeichnet, dass der analoge Massenspeicher zwei Speichereinheiten (31, 32) aufweist, von denen die eine in der Aufzeichnungs-Betriebsart arbeitet, während die andere in der Auslese-Betriebsart arbeitet und umgekehrt.

15. Einrichtung nach einem der Ansprüche 10 bis 14, dadurch gekennzeichnet, dass sie einen Steuerkreis (26) aufweist, der die Fehlernachweissignale erhält und die Aufzeichnung in den bzw. die Auslesung aus dem Massenspeicher steuert.

16. Einrichtung nach einem der Ansprüche 10 bis 15, dadurch gekennzeichnet, dass sie eine erste und eine zweite lichtempfindliche Einrichtung (11, 12) aufweist, die zu jeder Seite des Bandes (10) zum Erzeugen jeweils von Analogsignalen angeordnet sind, die die Bilder von aufeinanderfolgenden Abschnitten einer jeweiligen Fläche des Bandes darstellen, und einen Schaltkreis (15, 16), der einerseits zwischen die lichtempfindlichen Einrichtungen und anderseits den analogen Massenspeicher (31, 32) und die Verarbeitungseinrichtung (20) geschaltet ist, sowie Steuereinrichtungen (26) für den Schaltkreis zum wechselweisen Übertragen eines analogen Bildsignales der einen Fläche und eines analogen Bildsignales der anderen Fläche an den analogen Massenspeicher und die Verarbeitungseinrichtung.

17. Einrichtung nach Anspruch 16, dadurch gekennzeichnet, dass die Wiedergabeeinrichtung ein erstes und ein zweites Wiedergabegerät (41, 42) aufweist, die an den analogen Massenspeicher (31, 32) über Schalteinrichtungen (34, 43, 44, 45) angeschlossen sind, um die aufbewahrten Aufzeichnungen betreffend eine Fläche des Bandes (10) auf dem ersten Wiedergabegerät (41) und die aufbewahrten Aufzeichnungen betreffend die andere Fläche des Bandes (10) am zweiten Wiedergabegerät (42) sichtbar zu machen.

18. Einrichtung nach Anspruch 17, dadurch gekennzeichnet, dass die Schalteinrichtungen zum Verbinden des ersten und des zweiten Wiedergabegerätes (41, 42) unmittelbar an den jeweiligen Ausgang der ersten und der zweiten lichtempfindlichen Einrichtung (11, 12) in Abhängigkeit vom Fehlen einer sichtbar zu machenden aufbewahrten Aufzeichnung gesteuert sind.

**Claims**

1. Method for the detection of superficial faults in a moving sheet, according to which images of successive portions of surface of the sheet are

**24**

periodically formed, these images are converted into analog signals and these signals are processed in order to detect abnormal variations in the level of these signals, the processing comprising the operations of: conversion of the analog signals into digital form by dividing the image into image elements each being associated with a digital value, filtering of the digital signals representative of the image in order to detect relative variations of the digital values of the image elements, and analysis of the filtered signal in order to supply or not supply a fault detection signal as a function of the detected variations, characterized in that each image is formed by means of a single photosensitive device and in that during the forming of the said images,

- the analog signals representative of each image are recorded in an analog image memory,
- the processing of the analog signals relating to each image is carried out before presentation of the signals representative of the next image, the filtering of the digital signals representative of an image being carried out at least partially by means of a bidirectional contour detection filter which allows the detection of contours oriented in any direction by detecting, among several image elements located near each other in different directions, variations in the digital values of the said image elements of amplitude greater than a first predetermined threshold,
- the recording representative of the image is retained or not retained in response to the production or non-production of the fault detection signal, and
- each retained recording is read for display at an inspection station for a duration which is sufficient for carrying out a visual inspection of the image which it represents.

2. Method according to Claim 1, characterized in that the analysis of the filtered signal consists, for each image, in generating from detected amplitude variations greater than the first threshold a quantitative information on the surface irregularities of the considered image and in supplying or not supplying the fault detection signal depending on whether this quantitative information is greater than or not greater than a second predetermined threshold.

3. Method according to either of Claims 1 or 2, characterized in that the digital signals are separated into first digital signals representative of the portions of the image located along the edges of the sheet and second digital signals representative of the other portions of the image, in that the first digital signals are processed in order to detect the amplitude variations corresponding to the passage from one side to the other of the edges of the sheet and for supplying an information representing the difference between the detected position of the edge of the sheet and a reference position, and in that the second digital signals are processed in order to associate with each image element an information representing the amplitude variations of the digital signals associated with the adjacent image elements.

4. Method according to any one of Claims 1 to 3, characterized in that the analog signals representative of each image are recorded in a analog mass memory which can be addressed image by image, and in that moving from one address to another in write mode is commanded in response to a fault detection signal.

5. Method according to any one of Claims 1 to 4, characterized in that the retained recordings are read sequentially in order to allow a display of each of the images which they represent for a predetermined duration at the end of which the address at which the recording of the image which has just been displayed is located is again available in write mode.

6. Method according to any one of Claims 1 to 5, characterized in that a simultaneous examination is carried out on the two opposite surfaces of the sheet by alternating the processing of image signals of successive portions of one surface with the processing of image signals of successive portions of the other surface.

7. Method according to Claim 6, characterized in that the retained recordings of images of portions of one of the surfaces are displayed on a display device which is different from the one used for displaying the retained recordings of images of portions of the other surface.

8. Method according to any one of Claims 1 to 6, characterized in that, when no retained recording exists or remains to be displayed, the successive images of the surface of the examined sheet are transmitted directly to the inspection station.

9. Method according to any one of Claims 1 to 8, characterized in that the moving sheet has a speed of movement in the order of 6 m/s.

10. Installation for the detection of superficial faults in a moving sheet, comprising at least one photosensitive device which periodically generates analog signals representing the images of successive portions of the surface of the sheet and a device for processing the analog signals in order to detect abnormal variations in level, the processing device comprising:

– an analog-digital converter (22) for converting the analog signals representing each image into digital form by dividing the image into image elements each of which is associated with a digital value;
– a digital filter (23) receiving the digital signals representing each image and detecting relative variations of the digital values of the image elements; and
– an analysis circuit (24) connected to the output of the digital filter in order to generate or not generate, for each image, a fault detection signal as a function of the detected variations in digital values,

an installation characterized in that each image is generated by a single photosensitive device, and in that the digital filter comprises a bidirectional contour detection filter (23b) comprising means for associating with each image element a digital information computed as a function of the digital values associated with adjacent image elements in different directions, in detecting variations in the said digital values, and in that it furthermore comprises:

– an analog mass memory which can be addressed image by image (31, 32) intended for recording analog signals representing each image converted by the photosensitive device (11, 12) and in that:
– means (26) are provided for controlling the retention or the non-retention of the recording of an image, at the end of the period during which this image was converted by the photosensitive device, in response to the presence or the absence of a fault detection signal corresponding to this image, and
– a display device (41, 42) is connected to the analog mass memory for successively displaying in fixed image form each recording retained in order to allow a visual inspection of the image which this recording represents.

11. Installation according to Claim 10, characterized in that the digital filter comprises an edge detection filter (23a) in order to detect the positions of the edges of the sheet and supply informations representing the differences between the detected positions of the edges and reference positions.

12. Installation according to Claim 10, characterized in that the analysis circuit (24) comprises means for generating a quantitative information from detections of image elements for which the associated digital information exceeds a first predetermined threshold, and means of comparison in order to produce a fault detection signal when the said quantitative information exceeds a second predetermined threshold.

13. Installation according to Claim 10, characterized in that the analog mass memory (31, 32) is formed by at least one magnetic video-disk.

14. Installation according to any one of Claims 10 to 13, characterized in that the analog mass memory comprises two memory units (31, 32) one of which functions in write mode while the other functions in read mode, or vice-versa.

15. Installation according to any of Claims 10 to

14, characterized in that it comprises a control circuit (26) receiving the fault detection signals, and controlling the writing and reading in the mass memory.

16. Installation according to any one of Claims 10 to 15, characterized in that it comprises first and second photosensitive devices (11, 12) disposed on each side of the sheet (10) in order each to generate analog signals representing the images of successive portions of a respective surface of the sheet, a switching circuit (15, 16) connected between, on the one hand, the photosensitive devices and, on the other hand, the analog mass memory (31, 32) and the processing device (20), and means (26) of controlling the switching circuit in order to transmit alternately to the analog mass memory and to the processing device an analog image signal of one surface and an analog image signal of the other surface.

17. Installation according to Claim 16, characterized in that the display device comprises first and second display units (41, 42) connected to the analog mass memory (31, 32) via switching means (34, 43, 44, 45) controlled in order to display retained recordings relating to one surface of the sheet (10) on the first display unit (41) and to display the retained recordings relating to the other surface of the sheet (10) on the second display unit (42).

18. Installation according to Claim 17, characterized in that the switching means are controlled in order to connect the first display unit and the second display unit (41, 42) directly to the output of the first and the second photosensitive devices (11, 12) respectively in response to the absence of any retained recording to be displayed.

Fig. 1

Fig. 3

Fig. 2

Fig-4